# FASCICULE DE BREVET EUROPEEN

(11) **EP 3 325 346 B1**
(45) Date de publication et mention de la délivrance du brevet: **22.03.2023**
(21) Numéro de dépôt: 16757291.6
(22) Date de dépôt: 21.07.2016
(51) Int. Cl.: B64D 27/14, F01D 17/16, F02K 3/062, F04D 29/56, F04D 29/68

(54) **AERONEF COMPRENANT UN PROPULSEUR ARRIERE CARENE AVEC STATOR D'ENTREE A VOLETS MOBILES**
LUFTFAHRZEUG MIT EINEM STROMLINIENFÖRMIGEN HINTEREN TRIEBWERK MIT EINEM EINGANGSSTATOR MIT BEWEGLICHEN KLAPPEN
AIRCRAFT INCLUDING A STREAMLINED REAR THRUSTER WITH AN INPUT STATOR HAVING MOVABLE FLAPS

(30) Priorité: 22.07.2015 FR 1556956
(43) Date de publication de la demande: 30.05.2018
(73) Titulaire: Safran Aircraft Engines, 75015 Paris (FR)
(72) Inventeur: TANTOT, Nicolas, Jérôme, Jean, 77550 Moissy-Cramayel (FR)
(74) Mandataire: Gevers & Orès
(86) Numéro de dépôt international: PCT/FR2016/051886
(87) Numéro de publication internationale: WO 2017/013364

(56) Documents cités:
- EP-A1- 1 566 522
- EP-A1- 3 093 235
- FR-A- 1 339 141
- FR-A- 1 472 962
- FR-A1- 2 949 754
- FR-A1- 2 997 681
- US-A1- 2014 219 772

## Description

### Domaine de l'invention et état de la technique :

La présente invention se rapporte à un aéronef, tel qu'un avion, notamment civil, propulsé par une ou plusieurs soufflantes placées en aval du fuselage, et plus particulièrement le cas où les soufflantes sont carénées par une nacelle. L'invention concerne des moyens pour distribuer le flux d'air entrant dans ladite nacelle.

Le type de turbomachine avec une soufflante à l'arrière du fuselage se retrouve, par exemple, dans une architecture d'aéronef proposée dans les demandes de brevet FR-A1-2 997 681 et FR-A-1 339 141. Dans ce cas, la turbomachine est intégrée dans le prolongement du fuselage en aval de celui-ci, en vue de réduire les nuisances sonores et la consommation de carburant de l'aéronef en limitant la traînée aérodynamique par absorption de la couche limite.

Dans une telle architecture, un aéronef est propulsé par une turbomachine à soufflantes contrarotatives carénées, la turbomachine étant intégrée à l'arrière du fuselage de l'aéronef. Généralement, la turbomachine comprend au moins deux générateurs de gaz qui alimentent une turbine de puissance ayant deux rotors contrarotatifs pour entraîner deux soufflantes disposées en aval des générateurs de gaz. Les générateurs de gaz ont des entrées d'air latérales distinctes pour alimenter chacun d'eux.

En aval des générateurs de gaz, les soufflantes sont disposées dans le prolongement du fuselage de l'aéronef et généralement alimentées par une couronne annulaire reliée à ce dernier, de manière à absorber une partie au moins de la couche limite formée autour du fuselage. Le diamètre des soufflantes est de l'ordre de celui du fuselage dans sa plus grande section. La vitesse de rotation des soufflantes est généralement plus basse que pour des turbomachines classiques, notamment pour que la vitesse en tête d'aube soit subsonique.

Les deux soufflantes constituent un ensemble propulseur à faible taux de compression et fort débit. Dans ce cas, le fonctionnement et l'opérabilité dudit ensemble propulseur sont particulièrement sensibles aux conditions d'entrée du flux d'air dans la nacelle, notamment son orientation et son homogénéité.

La présente invention a pour objet de fournir une solution pour adapter au moins une partie des paramètres de l'écoulement entrant dans la nacelle aux conditions de fonctionnement de l'ensemble propulsif.

### Exposé de l'invention :

A cet effet, l'invention concerne un aéronef selon la revendication 1. L'aéronef comprend un fuselage et un ensemble propulseur, ledit ensemble propulseur comprenant au moins un rotor de soufflante placé à l'arrière du fuselage, dans le prolongement de celui-ci suivant un axe longitudinal, et une nacelle formant un carénage dudit au moins un rotor de soufflante dans lequel passe un flux d'air, l'aéronef comportant une pluralité de bras radiaux de stator montés en amont de dudit au moins un rotor de soufflante et s'étendant entre le fuselage et la nacelle, lesdits bras radiaux comportant au moins une partie mobile à calage variable configurée pour dévier axialement ledit flux d'air, les parties mobiles à calage variable pivotant autour d'axes qui s'étendent radialement du fuselage sensiblement à partir d'un même plan transversal à l'axe longitudinal et étant disposées à l'entrée de la nacelle, ladite nacelle comprenant un bord amont et chaque bras radial comprenant un bord d'attaque qui est relié au bord amont de la nacelle et au fuselage.

L'invention atteint son objectif par le fait que la déviation du flux d'air entrant dans le rotor de soufflante permet de corriger des inhomogénéités ou des distorsions de ce flux d'air, créées notamment au cours de son trajet le long du fuselage de l'aéronef.

Le calage des bras radiaux peut permettre également d'obtenir un effet redresseur de l'écoulement en amont du rotor de soufflante pour améliorer le rendement de l'ensemble propulseur.

Avantageusement, l'aéronef comprend en outre des moyens de réglage individuels du calage de la partie mobile des bras radiaux, de manière à permettre un calage adaptatif en fonction d'une inhomogénéité circonférentielle dudit flux d'air en amont de l'ensemble propulseur.

Le calage adaptatif peut permettre d'améliorer l'opérabilité de l'ensemble propulseur en fonction des conditions de vol de l'aéronef.

Le fait que les parties mobiles des bras radiaux pivotent autour d'axes qui s'étendent radialement du fuselage sensiblement à partir d'un même plan transversal à l'axe longitudinal permet une déviation homogène du flux d'air incident avant son passage dans le rotor de soufflante.

Avantageusement, au moins un anneau de commande, de préférence situé à l'intérieur du fuselage, et un ensemble d'au moins deux bielles de liaison dudit au moins un anneau de commande à chacune desdites parties mobiles.

Suivant une caractéristique de l'invention, l'aéronef comporte plusieurs bras de maintien configurés pour maintenir la nacelle et qui comportent les parties mobiles à calage variable.

De préférence, la pluralité de bras radiaux comporte au moins plusieurs bras de maintien, configurés pour maintenir la nacelle.

L'utilisation de plusieurs bras de maintien en amont permet d'augmenter l'homogénéité et la symétrie de la reprise des efforts supportés par la nacelle. La rigidité de cette dernière peut alors être réduite, ce qui contribue à réduire la masse de l'ensemble.

La pluralité de bras radiaux peut comporter au moins plusieurs aubes radiales formant d'un bloc ladite partie mobile.

Ces aubes radiales mobiles ont une corde moins grande que les bras de maintien. Elles ont donc un sillage moins important et on peut en avoir un plus grand nombre pour homogénéiser plus finement l'écoulement entrant dans la nacelle.

Avantageusement, la pluralité de bras radiaux comporte au moins plusieurs bras radiaux comprenant des moyens de soufflage configurés pour souffler, dans l'environnement d'un bord de fuite desdits bras radiaux, un flux d'air additionnel s'additionnant audit flux d'air dans le prolongement du bord de fuite.

Le soufflage d'air dans le prolongement du bord de fuite permet de limiter le ralentissement local de l'écoulement lié au bras, appelé « sillage », en le ré-énergisant. En particulier, ce sillage est une source de bruit importante lorsque les aubes du rotor de soufflante le rencontrent en aval. En le diminuant, on atténue donc le bruit généré par l'ensemble propulseur de l'aéronef.

Lesdits moyens de soufflage peuvent être agencés pour souffler ledit flux d'air additionnel hors desdits bras radiaux, en amont d'une partie mobile à calage variable.

Avantageusement, ledit rotor de soufflante a un diamètre extérieur sensiblement égal à un diamètre maximal du fuselage, ce qui permet de maintenir la vitesse de rotation lente en brassant un débit d'air important, et d'ingérer une partie importante de la couche limite qui se développe sur le fuselage de l'aéronef. De préférence, la vitesse de rotation dudit au moins un rotor de soufflante est inférieure à 340m/s en périphérie extérieure dudit rotor de soufflante.

On peut éviter l'apparition de vitesses élevées lors de la déviation d'air par les aubes du rotor de soufflante, tout en obtenant une poussée importante par le débit d'air brassé. On limite ainsi les nuisances sonores et les pertes propulsives.

De préférence, ledit aéronef comprend une turbomachine comportant au moins un générateur de gaz configuré pour générer un flux primaire qui est délivré par une veine centrale à au moins une turbine de puissance, ladite turbine de puissance étant placée à l'arrière du fuselage en prolongement de celui-ci et entraînant à sa périphérie ledit au moins un rotor de soufflante.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 présente une vue schématique en coupe longitudinale de la partie arrière d'un aéronef avec son ensemble propulsif ;
- la figure 2 présente une vue schématique de côté de la partie arrière d'un aéronef selon l'invention avec son ensemble propulsif ;
- la figure 3 présente une vue schématique de la partie arrière d'un aéronef selon l'invention avec son ensemble propulsif, suivant une coupe longitudinale par un plan passant par un bras de maintien équipé d'un volet mobile ;
- la figure 4 présente une vue schématique de la partie arrière d'un aéronef selon l'invention avec son ensemble propulsif, suivant une coupe longitudinale par un plan passant par une aube radiale mobile ;
- la figure 5 présente une vue schématique du dispositif de réglage du calage d'un volet mobile de bras ou d'une aube radiale de stator applicable dans l'invention ;
- la figure 6 présente une vue schématique de la partie arrière d'un aéronef selon l'invention avec son ensemble propulsif, suivant une coupe longitudinale par un plan passant par un bras de maintien équipé d'un dispositif de soufflage ;
- La figure 7a présente schématiquement en perspective une portion du bord de fuite d'un bras de maintien de nacelle selon l'invention équipé d'une première variante de moyens de soufflage ;
- La figure 7b présente schématiquement en perspective avec une coupe, une portion du bord de fuite d'un bras de maintien de nacelle selon l'invention équipé d'une deuxième variante de moyens de soufflage ;
- La figure 8a présente schématiquement une coupe près du bord de fuite d'un bras de maintien de nacelle selon l'invention équipé d'une troisième variante de moyens de soufflage, mis dans une première position ;
- La figure 8b présente schématiquement une coupe près du bord de fuite d'un bras de maintien de nacelle selon l'invention équipé d'une troisième variante de moyens de soufflage, mis dans une deuxième position ; et
- Les figure 9a et 9b présentent schématiquement une coupe près du bord de fuite d'un bras de maintien de nacelle selon l'invention équipé d'une troisième variante de moyens de soufflage, correspondant aux figures 8a ou 8b, associée à un volet mobile avec et sans incidence.

### Description d'un mode de réalisation :

### L'AERONEF ET LA TURBOMACHINE

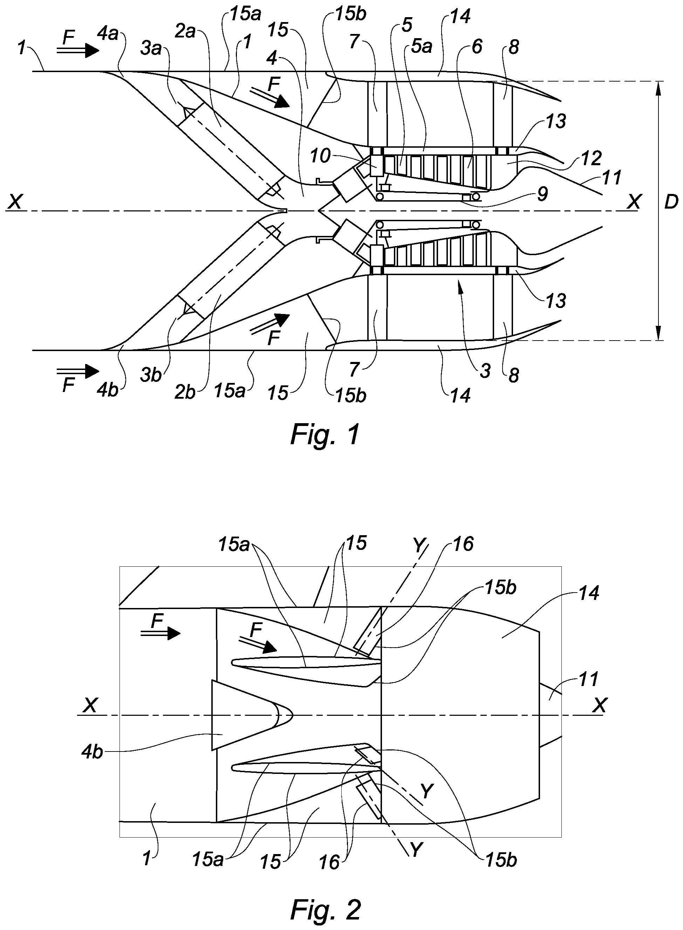

L'invention s'applique en particulier à un aéronef tel qu'un avion comportant une turbomachine du type de celle représentée sur la figure 1 ou la figure 2.

Comme représenté sur la figure 1, la turbomachine est centrée sur l'axe longitudinal XX du fuselage 1 de l'aéronef. Cette turbomachine comprend, d'amont en aval, dans le sens d'écoulement des gaz, deux générateurs de gaz distincts 2a, 2b alimentant simultanément une unique turbine de puissance 3. La turbomachine est installée à l'extrémité avale du fuselage 1 de l'aéronef.

Dans ce document, les dénominations axiales et radiales se réfèrent à l'axe XX du fuselage et de la turbomachine. De même, les termes amont et aval se réfèrent à la direction de l'écoulement principal le long de cet axe.

De façon connue en soi, chaque générateur de gaz 2a, 2b comprend au moins un compresseur, une chambre de combustion et au moins une turbine (non représentés sur les figures).

Chaque générateur de gaz 2a, 2b est logé à l'intérieur d'une veine d'écoulement primaire 3a, 3b. Des entrées d'air distinctes 4a, 4b sont prévues pour ces veines 3a, 3b afin d'alimenter chaque générateur de gaz 2a, 2b.

Dans la configuration représentée sur la figure 1, ces entrées d'air 4a, 4b sont reliées au fuselage 1 de l'aéronef, en amont des générateurs de gaz 2a, 2b. Plus précisément, leur paroi interne est directement intégrée au fuselage 1 de l'aéronef.

Dans d'autres configurations, non représentées ici, les entrées d'air 4a, 4b peuvent être écartées du fuselage pour alimenter les compresseurs des générateurs de gaz 2a, 2b avec un écoulement moins perturbé par la couche limite sur le fuselage 1. Il est également envisageable d'utiliser plus de deux générateurs de gaz, par exemple trois pour alimenter la turbine de puissance 3.

En tout état de cause, les entrées d'air 4a, 4b sont conçues pour limiter les perturbations qu'elles peuvent créer en aval sur l'écoulement F longeant le fuselage 1 et entrant dans un ensemble propulseur qui est décrit dans la suite. De plus, elles se situent ici au début de la partie du fuselage 1 qui va en se rétrécissant vers ledit ensemble propulseur, de manière à les éloigner de ce dernier.

De préférence, les deux veines d'écoulement primaires 3a, 3b des générateurs de gaz 2a, 2b convergent sur l'axe longitudinal XX et forment entre elles un V ouvert vers l'amont, dont l'angle d'ouverture est de préférence compris entre 80° et 120°.

Les deux veines d'écoulement primaires 3a, 3b des générateurs de gaz 2a, 2b convergent dans une veine primaire centrale 4 qui alimente la turbine de puissance 3. Un mélangeur (non représenté sur les figures) est de préférence positionné au niveau de la zone de convergence des deux veines 3a, 3b, logeant les générateurs de gaz 2a, 2b. Ce mélangeur a pour fonction de mélanger les flux gazeux issus des deux générateurs de gaz 2a, 2b pour créer un flux gazeux unique homogène en sortie de la veine centrale primaire 4.

La turbine de puissance 3, qui est alimentée par ce flux primaire en sortie de la veine centrale 4, est placée dans le prolongement du fuselage 1. Elle est munie de deux rotors 5, 6 de turbine contrarotatifs pour entraîner de façon contrarotative deux rotors de soufflantes 7, 8. Ces rotors de turbine 5, 6 sont coaxiaux et centrés sur l'axe longitudinal XX. Ils tournent autour d'un carter intérieur 9 fixé à la structure de l'aéronef.

Ici, un premier rotor 5 de turbine correspond à des aubes liées à un corps tubulaire 5a séparant la veine d'écoulement primaire, dans la turbine de puissance 3, de la veine d'écoulement secondaire, dans laquelle se trouvent les rotors de soufflante 7,8. Les aubes et le corps tubulaire 5a du premier rotor 5 sont reliées aux paliers de support du rotor 5 sur le carter intérieur 9 par des bras support 10 qui traversent la veine primaire en amont de la turbine de puissance 3.

Sur le même exemple, le deuxième rotor 6 correspond à des aubes liées à une paroi radialement intérieure de la veine primaire dans la turbine 3 et intercalées longitudinalement entre les aubes du premier rotor 5.

En aval de la turbine de puissance 3, la partie radialement interne du deuxième rotor 6 se prolonge par un corps central 11. D'autre part, elle est reliée, par des bras support 12, à un anneau 13 de support des aubes du rotor de soufflante aval 8. De plus, cet anneau 13 prolonge le corps tubulaire 5a du premier rotor 5 et comporte une extension vers l'arrière, de façon à former, avec le corps central 11, une tuyère d'éjection primaire, en sortie de la turbine de puissance 3.

Sur l'exemple présenté, l'ensemble propulseur est formé de deux rotors de soufflantes 7, 8 carénés par une nacelle 14 fixée à la structure de l'aéronef. Les rotors de soufflantes présentent un diamètre externe D qui est proche du diamètre externe le plus élevé du fuselage 1 de l'aéronef.

Ici, un premier rotor de soufflante 7, amont, est positionné au niveau de l'entrée de la turbine de puissance 3. Il est relié au premier rotor 5 de turbine 3 au niveau des bras 10 qui soutiennent en amont le corps extérieur cylindrique 5a. Ce rotor de soufflante amont 7 tourne donc à la même vitesse que le premier rotor 5 de la turbine de puissance 3.

Sur ce même exemple, le deuxième rotor de soufflante 8, aval, est positionné au niveau de la sortie de la turbine de puissance 3. Il est relié au deuxième rotor 6 de turbine 3 au niveau de l'anneau de support 13 et des bras 12 qui le soutiennent. Ce rotor de soufflante aval 8 tourne donc à la même vitesse que le deuxième rotor 6 de la turbine de puissance 3.

L'air entrant dans les soufflantes 7, 8 étant en partie composé de la couche limite du fuselage de l'aéronef, la vitesse en entrée est peu élevée par rapport à des soufflantes classiques de turbomachine et la vitesse en sortie est également plus basse à taux de compression identique, ce qui améliore les performances propulsives et acoustiques de ces soufflantes. Par ailleurs, l'important diamètre externe D des soufflantes 7, 8 entraîne que leur vitesse de rotation, comme celle des rotors 5, 6 de la turbine de puissance 3, restera également peu élevée par rapport à une turbomachine classique.

Par ailleurs, dans une variante de réalisation, non décrite, la turbine de puissance 3 peut être composée de manière connue d'un seul rotor et d'un stator, le propulseur n'ayant qu'une seule soufflante associée à ce rotor.

### MAINTIEN DE LA NACELLE

En référence à la figure 2, la nacelle 14 est maintenue par plusieurs bras de maintien 15 répartis circonférentiellement, typiquement entre trois et six bras, la reliant en amont du premier rotor de soufflante 7 à une structure fixe de l'aéronef 1. Le bras de maintien prolonge la nacelle 14 des soufflantes jusqu'au fuselage. La multiplication du nombre de bras de maintien 15 permet d'augmenter l'homogénéité et la symétrie de la reprise des efforts supportés par la nacelle 14. La rigidité de cette dernière peut alors être réduite, ce qui contribue à réduire la masse de l'ensemble.

Par contre, on cherche à réduire les perturbations des bras de maintien 15 sur l'écoulement F entrant dans la nacelle 14, ainsi que leur traînée. Ces bras de maintien 15 comportent donc un capotage profilé formant une aube radiale qui s'étend du fuselage 1 de l'aéronef à la nacelle 14. Sur l'exemple présenté en figure 2 cette aube a une forme sensiblement trapézoïdale entre une base inférieure allongée, à son intersection avec le fuselage 1, et une base extérieure courte, à son intersection avec la nacelle 14. Elle présente en amont, suivant le sens de l'écoulement F entrant dans la nacelle 14, un bord d'attaque 15a qui relie le fuselage 1 et la nacelle 14 suivant une direction sensiblement parallèle à l'axe XX. En aval, son bord de fuite 15b, sensiblement transverse à l'écoulement F entrant dans la nacelle 14, suit une direction qui forme un angle proche de l'angle droit avec le fuselage 1.

### BRAS AVEC VOLET MOBILE

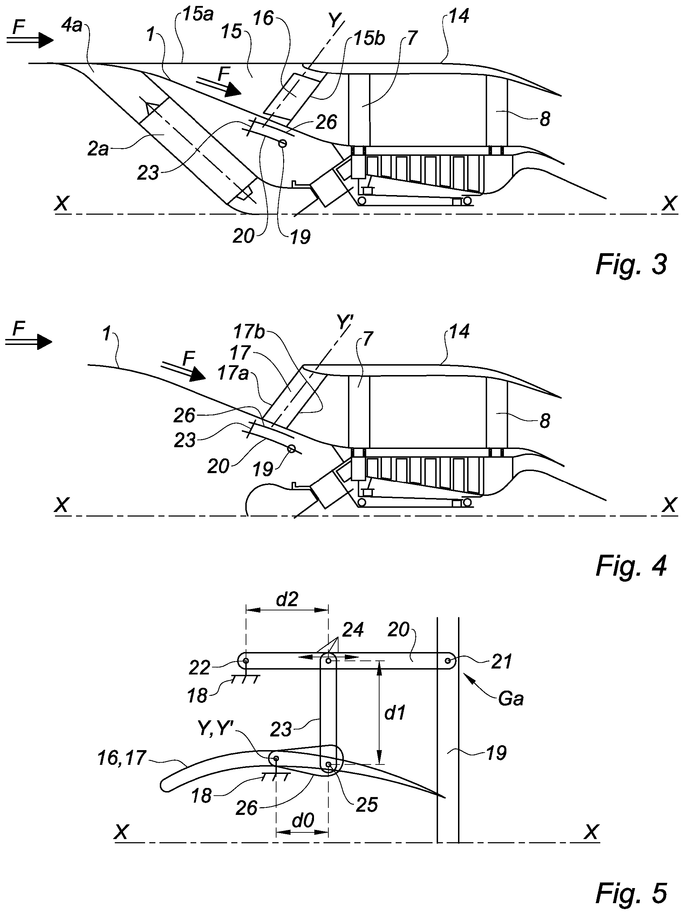

En référence aux figures 2 et 3, selon un premier aspect de l'invention, les bras de maintien 15 de la nacelle 14 peuvent être munis de volets 16 au niveau de leur bord de fuite 15b. Chacun desdits volets est mobile en rotation autour d'un axe Y sensiblement radial et parallèle au bord de fuite 15b et s'étend sensiblement sur l'envergure du bras de maintien 15. Les volets sont disposés à l'entrée de la nacelle comme cela est visible sur la figue 3.

L'écoulement F alimentant les rotors de soufflantes 7, 8 est dévié en amont, en longeant le fuselage 1, par les variations de forme du fuselage ainsi que par des éléments non représentés, par exemple les ailes, se raccordant audit fuselage. Le fait de rendre mobile un volet 16 de bord de fuite permet d'orienter cet écoulement F avant le rotor de soufflante 7 et de minimiser l'incidence perçue par le rotor de soufflante et la distorsion afférente. Compte tenu du fait que les deux rotors de soufflantes 7, 8 constituent un ensemble propulseur à faible taux de compression et fort débit, la minimisation des distorsions du flux d'air entrant dans la nacelle 14 peut améliorer de manière importante le fonctionnement et l'opérabilité dudit ensemble propulseur.

Comme représenté sur la figure 3, ces volets mobiles 16 s'étendent sur la majeure partir de l'envergure du bras de maintien 15, de manière à orienter la totalité de l'écoulement entrant dans la nacelle 14. Sur la figure 3, le volet mobile 16 a une corde sensiblement constante en fonction de l'envergure mais cela n'est pas limitatif. La corde du volet mobile peut par exemple croître en allant du fuselage 1 vers la nacelle 14, s'il est intéressant de modifier plus fortement l'écoulement F vers l'extrémité radiale des aubes du rotor de soufflante amont 7.

Le réglage de l'angle de calage des volets mobiles 16 peut être effectué de manière collective, avec la même valeur pour tous les bras de maintien 15, ou individualisée, en adaptant la valeur en fonction de la position azimutale de chaque bras de maintien 15. Cette seconde option permet de traiter des conditions d'alimentation de l'ensemble propulseur par un écoulement F non symétrique, par exemple dans le cas d'un vent de travers.

Le réglage de l'angle de calage des volets mobiles 16 peut également varier temporellement et être asservi aux variations des conditions d'alimentation de l'ensemble propulseur. Dans le cas du vent de travers, par exemple, cela permet de tenir compte de sa variation d'intensité ou de direction.

### AUBE RADIALE MOBILE

Dans une variante de réalisation, illustrée sur la figure 4, des aubes de stator radiales à calage variable 17, reliant le fuselage 1 à la nacelle 14, peuvent être disposées en azimut entre les bras de maintien 15, de préférence au même niveau axialement que les volets mobiles 16 de ces bras. Ces aubes sont mobiles en rotation, chacune autour d'un axe Y' ayant une inclinaison par rapport à l'axe XX sensiblement égale à celle des axes de rotation Y des volets mobiles 16 des bras de maintien 15. Les aubes sont disposées à l'entrée de la nacelle 14.

Ici, les aubes radiales de stator 17 n'ont pas de fonction structurale pour maintenir la nacelle 14. Dans cet exemple, chaque aube radiale de stator 17 possède une forme allongée, de préférence tridimensionnelle, s'étendant selon une direction radiale. Chaque aube radiale de stator 17 possède, de préférence, une corde sensiblement constante sur sa longueur et sensiblement égale à celle des volets mobiles 16 sur les bras de maintien 15. De préférence, chaque aube radiale de stator 17 forme un corps aérodynamique ayant un bord d'attaque 17a et un bord de fuite 17b de manière à dévier tout flux d'air incident F reçu par l'aube radiale de stator 17.

Ici, Le calage d'aubes radiales 17 est réglable et, éventuellement, asservi, de manière individuelle ou collective, selon les mêmes modalités que celles décrites pour les volets mobiles 16 des bras de maintien 15. L'ensemble des aubes radiales 17 et des volets mobiles 16 forme ainsi une couronne de bras radiaux de stator à calage variable en entrée de la nacelle 14.

Dans l'exemple présenté, avec les rotors de soufflantes contrarotatives 7, 8, l'augmentation du nombre de profils à calage variables permet de corriger plus finement les inhomogénéités de l'écoulement F entrant dans la nacelle 14, le nombre des bras de maintien 15 étant limité. Les valeurs des angles de calage des volets mobiles 16 et des aubes radiales 17 évoluent, de préférence, dans une plage de valeurs faibles, typiquement inférieur à 15° en valeur absolue.

### CAS D'UNE SEULE SOUFFLANTE

Dans le cas, non représenté où l'ensemble propulseur comprendrait un seul rotor de soufflante dans la nacelle 14, l'ensemble de bras radiaux à calage variable, formé par les volets mobiles 16 et les aubes radiales à calage variable 17, peut faire office de roue directrice d'entrée. En effet, la pluralité des volets mobiles 16 et des aubes de stator à calage variable 17 montés en amont du rotor de soufflante permettent de dévier le flux d'air F incident de manière à ce que le flux d'air F dévié comporte une composante axiale et tangentielle. Ensuite, le flux d'air F dévié est redressé axialement par les aubes du rotor de soufflante et comprimé de manière à ce que le flux d'air sortant de la nacelle 14 ne comporte, avantageusement, qu'une composante majoritaire axiale.

De préférence, un tel ensemble redresseur comporte un nombre de profils à calage variable, aubes radiales 17 et volets mobiles 16, au moins égal à vingt. De plus pour obtenir un effet redresseur, le calage des aubes radiales 17 et des volets mobiles 16 dépend du rotor de soufflante mais doit être au minimum de 15°, tout en restant normalement inférieur à 65°.

De même, si l'on considère un critère aérodynamique, appelé « spacing » et qui est défini par le rapport de la longueur de corde des volets mobiles 16 ou aubes radiales 17 sur la distance entre deux volets mobiles 16 ou aubes radiales 17 adjacents en tête, la valeur du « spacing » est supérieure à 0,8, pour obtenir un effet redresseur. En comparaison, pour les bras de maintien 15, on recherchera une valeur du « spacing » inférieure à 0,5, pour minimiser leurs perturbations de l'écoulement incident F.

### COMPLEMENT SUR LES SYSTEMES DE REGLAGE DU CALAGE

Plusieurs dispositifs peuvent être installés pour réaliser un calage adaptatif et individuel des volets mobiles 16 et/ou des aubes radiales 17 autour de leurs axes de rotation Y, Y' respectifs. Un exemple de réalisation de moyens de réglage individuel du calage des volets mobiles 16 et/ou des aubes radiales 17 est donné ici à titre illustratif et non limitatif.

Dans cet exemple, en référence aux figures 3 et 4, les moyens de réglage individuel du calage variable sont préférentiellement localisés sur une structure fixe, non représentée, à l'intérieur du fuselage 1.

Dans cet exemple, en référence à la figure 5, chaque volet mobile 16 et/ou aube radiale 17 est monté en rotation autour de son axe de rotation, également dit axe de calage Y, Y', ledit axe de calage Y, Y' étant fixé sur un moyen de pivot solidaire d'une structure fixe 18 de l'aéronef. Par ailleurs un anneau de commande 19 est monté mobile en rotation autour de l'axe longitudinal X-X par rapport à la structure fixe 18 de l'aéronef.

Une première bielle 20 est montée, au niveau d'une des ses extrémités, en rotation autour d'un premier axe de pivot 21 sensiblement radial et solidaire de l'anneau de commande 19, et, au niveau de son autre extrémité, en rotation autour d'un deuxième axe de pivot 22 sensiblement radial et monté sur la structure fixe18 de l'aéronef.

Le premier axe de pivot 21 peut être, par exemple, un pion s'insérant dans une fente longitudinale à l'extrémité de la bielle 20. De cette manière, lorsque l'anneau de commande 19 tourne, le déplacement du pion peut entraîner la bielle 20 en rotation autour du deuxième axe de pivot 22.

Le deuxième axe de pivot 22 de la première bielle 20 est décalé en azimut par rapport à l'axe de calage Y, Y' du volet mobile 16 ou de l'aube radiale 17 et, ici, en amont de cet calage Y, Y'.

Ici, la première bielle 20 est sensiblement alignée avec l'axe longitudinal X-X, donc sensiblement perpendiculaire à l'anneau de commande 19 pour une position Ga de ce dernier correspondant à un calage moyen du volet mobile 16 ou de l'aube radiale 17.

Une deuxième bielle 23 est montée pivotante sur la première bielle 20 autour d'un axe d'articulation 24 entre les deux bielles, proche d'une de ses extrémités. Des moyens supportant ledit axe d'articulation 24 peuvent être configurés de manière à ce que l'on puisse déplacer l'axe d'articulation 24 sur la première bielle 20.

La deuxième bielle 23 est articulée, à proximité de son autre extrémité, de manière pivotante autour d'un troisième axe de pivot 25 monté sur le volet mobile 16 ou l'aube radiale 17. Le troisième axe de pivot 25 est placé à une distance dû non nulle de l'axe de calage Y, Y' du volet mobile 16 ou de l'aube radiale 17, de manière à assurer un bras de levier permettant de transformer le déplacement de la deuxième bielle 23 en un mouvement de rotation du volet mobile 16 ou de l'aube radiale 17, donc en une modification de son angle de calage. Ce décalage peut être assuré par une bielle 26 fixe par rapport au volet mobile 16 ou à l'aube radiale 17, ou par tout autre moyen. Ici, le troisième axe de pivot 25 se trouve sensiblement sur la corde du volet mobile 16 ou de l'aube radiale 17, sans que cet exemple soit limitatif. Sur l'exemple présenté, le troisième axe de pivot 25 se trouve en aval de l'axe de calage Y, Y' du volet mobile 16 ou de l'aube radiale 17.

Par ailleurs, la deuxième bielle 23 est ici montée de telle sorte qu'elle soit sensiblement perpendiculaire à la première bielle 25 pour une position de l'anneau de commande 24 correspondant à un calage moyen du volet mobile 16 et/ou de l'aube radiale 17.

Avec un tel montage, on dispose pour faire varier l'angle de calage de chaque volet mobile 16 ou aube radiale 17, d'une variable de commande Ga, correspondant à la position de l'anneau de commande 19 lorsqu'il tourne autour de l'axe XX, et de deux paramètres ajustables pour modifier l'influence de la variable de commande Ga en fonction de la position azimutale du volet mobile 16 et/ou de l'aube radiale 17.

Un premier paramètre correspond à la distance d1, sur la deuxième bielle 23, entre le troisième axe de pivot 25 et l'axe d'articulation 24 avec la première bielle 20. Cette distance d1 a une influence immédiate, comme on peut s'en persuader en regardant la figure 5, sur l'angle de calage du volet mobile 16 et/ou de l'aube radiale 17 pour une position Ga donnée de l'anneau de commande 19. Cette distance d1 peut être modifiée, par exemple, en changeant de deuxième bielle 23.

Le deuxième paramètre concerne la distance d2, sur la première bielle 20, entre le deuxième axe de pivot 22 et l'axe d'articulation 24 avec la deuxième bielle 23. Ce deuxième paramètre d2 est plus particulièrement lié à un facteur multiplicatif de l'amplitude des variations de l'angle de calage du volet mobile 16 ou de l'aube radiale 17 par rapport aux variations de position Ga de l'anneau de commande 19. La diminution de la distance d2 induit une diminution des amplitudes de l'angle de calage pour un même déplacement Ga de l'anneau de commande 19, et inversement.

Un tel dispositif peut être utilisé pour corriger les inhomogénéités de la couche limite ingérée par les rotors de soufflantes 7, 8. On constate un niveau moindre de distorsion due à l'ingestion de couche limite à faible vitesse (atterrissage ou décollage) et, par contre, une forte distorsion en vol de croisière. On peut alors régler le calage des volets mobiles 16 et/ou des aubes radiales 17:
- en associant une première valeur de la position Ga de commande au vol à faible vitesse, pour laquelle aucune variation azimutale de calage des aubes n'est nécessaire, et
- en associant une deuxième valeur de la position Ga de commande au vol de croisière, pour laquelle une variation azimutale de calage des aubes est effectuée pour corriger la distorsion.

### BRAS STRUCTURAUX AVEC SOUFFLAGE

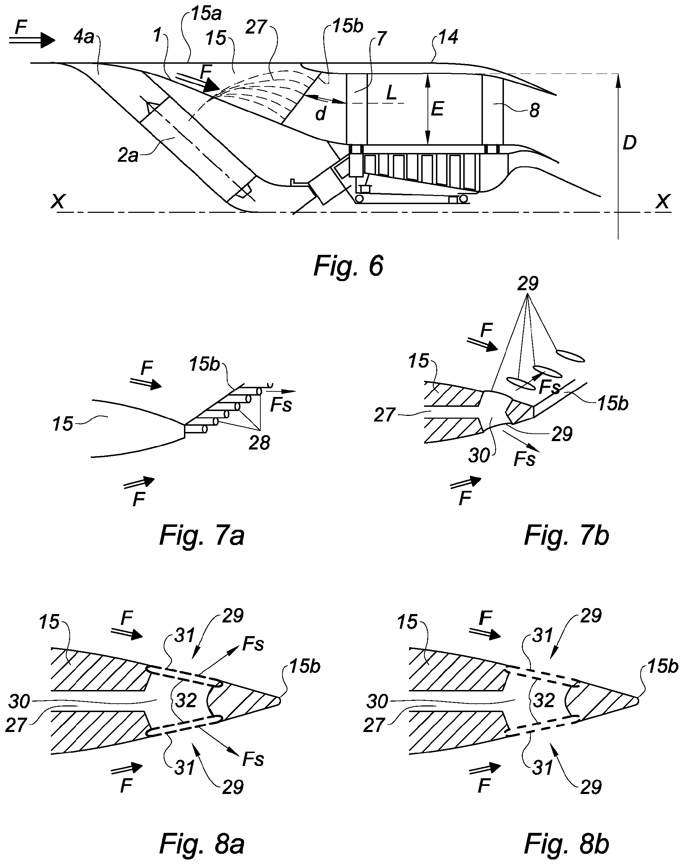

Selon un autre aspect de l'invention, en référence à la figure 6, les bras de maintien 15 peuvent être munis de dispositifs permettant d'effectuer un soufflage d'air additionnel Fs au niveau de leur bord de fuite 15b. Avantageusement, cet air est ici prélevé au niveau des compresseurs du ou des générateurs de gaz 2a et acheminé vers les dispositifs de soufflage par des conduits 27 passant à l'intérieur du bras de maintien 15.

Le soufflage d'air additionnel Fs permet de combler, idéalement de manière totale, le déficit de vitesse dû à la couche limite qui se forme le long du capotage du bras, dans l'écoulement F entrant dans la nacelle 14. Il supprime ou atténue fortement le sillage qui se forme derrière le bras de maintien 15.

Or l'interaction de ce sillage avec les aubes des rotors de soufflantes 7, 8 qui défilent derrière en rotation est une source importante de bruit. Typiquement, le bruit créé par ces interactions peut se décomposer en une composante tonale et une composante large bande.

La composante tonale correspond à l'interaction entre le sillage moyen et, principalement, le premier rotor de soufflante 7. Cette composante se manifeste aux fréquences propres du rotor de soufflante amont 7. On constate une augmentation significative des niveaux de bruit à la fréquence fondamentale de défilement des aubes du rotor 7 et à ses harmoniques.

La composante large bande correspond principalement à l'interaction entre les structures turbulentes contenues dans le sillage du bras de maintien 15 et le bord d'attaque des aubes du rotor de soufflante 7.

Les normes aéronautiques cherchent en particulier à réduire la valeur de ce bruit en champ lointain pour limiter les nuisances sonores et émettent des contraintes sur sa valeur en en mesurant un impact pour l'environnement. L'évaluation du bruit perçu correspond à une pondération de l'intensité en fonction des fréquences et est mesurée suivant une unité nommée EPNdB (pour l'anglo-saxon Effective perceived Noise décibels). A titre indicatif, il a été expérimenté qu'un bras fixe placé devant un doublet d'hélices contrarotatives non carénées peut entraîner une pénalité d'environ 6 EPNdb sur le bruit émis par un aéronef. En contrepartie, il a été estimé que cet impact sonore peut être en partie réduit à 3 EPNdb avec un soufflage d'air au bord de fuite du bras.

Dans un premier mode de réalisation des dispositifs de soufflage, en référence à la figure 7a, le bord de fuite 15b du bras de maintien 15 est tronqué et laisse le passage à des buses 28 de soufflage d'air additionnel Fs, réparties sur l'envergure du bras de maintien 15. Ces buses sont alimentées par les conduits 27 précédemment décrits. L'espacement des buses 28, leur diamètre et leur forme sont agencés, en rapport avec le débit d'air amené par les conduits 27 pour créer des jets qui entraînent l'écoulement de manière à compenser le déficit de vitesse derrière le bord de fuite 15b et, ainsi, à minimiser le sillage du bras. Avantageusement, lesdites buses 28 sont rétractables lorsqu'il n'y pas de soufflage.

Dans un deuxième mode de réalisation, en référence à la figure 7b, des orifices d'éjection 29 pour le soufflage d'air additionnel Fs sont répartis, ici sur chaque face du profil du bras de maintien 15, en amont du bord de fuite 15b. Ces orifices d'éjection 29 peuvent avoir la forme de trous ovoïdes ou de fentes allongées de manière sensiblement parallèle au bord de fuite 15b. Les conduits 27 d'alimentation en air débouchent dans une cavité interne 30 qui communique avec les orifices d'éjection 29. Dans ce dispositif, le soufflage d'air additionnel Fs sortant par les orifices d'éjection 29 est rapidement rabattu le long de la paroi du bras de maintien 15 et le débit d'air injecté permet de compenser le déficit de vitesse derrière le bord de fuite 15b. Les formes de la cavité interne 30 et des orifices d'éjection 29 sont agencées pour optimiser ce phénomène.

Dans cette conception, l'extension des orifices de soufflage 29 le long de la corde du profil du bras de maintien 15 est de préférence de l'ordre de grandeur de l'épaisseur de la couche limite qui se développe dans l'écoulement F autour de ce profil. Typiquement, pour une longueur de corde de 1m sur le bras de maintien 15 de la nacelle 14 et une couche limite turbulente, l'extension des orifices de soufflage 29 le long de la corde est d'environ 5 à 10 cm. L'extension le long de l'axe longitudinal XX des orifices de soufflage 29 se situant à une distance radiale donnée dudit axe XX est donc, de préférence, comprise entre 5% et 10% de la longueur de corde du bras de maintien 15 au niveau de ladite distance radiale.

Par ailleurs, le bord de fuite 15b des bras de maintien 15 se trouve préférentiellement à une distance suffisante du rotor de soufflante amont 7 pour que le jet du soufflage se mélange à l'écoulement principal F contournant le bras de maintien 15 et atténue l'effet de sillage. Ici, cet éloignement est mesuré par une distance d prise entre le bord de fuite 15b et le rotor de soufflante amont 7 en suivant une ligne de courant L passant à un certain pourcentage de l'envergure des aubes du rotor de soufflante amont 7. Typiquement cette distance d est de l'ordre de 15% du diamètre D du rotor de soufflante amont 7 à 70% de l'envergure E des aubes de ce dernier

De manière avantageuse, l'ensemble comporte également des moyens qui permettent de faire varier le débit soufflé selon la position en envergure E et/ou de le réguler dans le temps.

Selon une première variante, une ou plusieurs valves, non représentées, peuvent être placées sur les conduits 27 alimentant les buses 28 ou les orifices d'éjection 29. L'ouverture de chaque valve peut être pilotée pour contrôler le débit d'air passant dans le ou les conduits 27 auxquels elle est branchée. Le débit d'air Fs soufflé par les buses 28 ou les orifices d'éjection 29 correspondants est ainsi réglé de manière individuelle ou groupée suivant leurs positions sur l'envergure du bras de maintien 15.

En référence aux figures 8a, 8b, une deuxième variante est applicable, préférentiellement, au cas où les orifices d'éjections 29 forment des fentes parallèles au bord de fuite 15b, que ce soit de manière continue ou discontinue. Dans cette variante, une fente d'éjection 29 est recouverte par une première grille 31, fixe, et par une deuxième grille 32, mobile en translation le long de la surface du profil du bras de maintien 15. Les deux grilles 31, 32, ont avantageusement une géométrie sensiblement identique, notamment en ce qui concerne la géométrie de leurs orifices et des barreaux les séparant. Ici, la première grille 31 est externe et la deuxième grille 32 glisse sous la première grille. La position de la deuxième grille 32 est contrôlée par un actuateur qui n'est pas représenté sur les figures.

Dans une première position de la deuxième grille 32, en référence à la figure 8a, les orifices des deux grilles 31, 32, se superposent. La fente d'éjection 29 laisse donc passer un maximum de débit de soufflage Fs compatible avec les conditions d'alimentation par le conduit 27.

Dans une deuxième position de la deuxième grille 32, en référence à la figure 8b, les orifices de chaque grille 31, 32 se trouvent face aux barreaux de l'autre grille. Avantageusement cette superposition ferme complètement le passage par la fente d'éjection 29 du flux d'air venant par le conduit d'alimentation 27.

En pilotant la translation de la grille 32 entre la première et la deuxième position, on peut ainsi faire varier, de manière sensiblement continue, le débit d'air soufflé Fs au travers de la fente d'éjection 29 entre une valeur minimale et une valeur maximale.

Dans un mode de réalisation particulier, on peut séparer les grilles 32, 31, ainsi que les fentes 29 éventuellement, en plusieurs parties le long de l'envergure du bord de fuite 15b et contrôler de manière différenciée la translation des grilles mobiles 32. Il est ainsi possible de moduler en temps et en espace le débit soufflé au niveau du bord de fuite 15b.

La modulation du débit d'air soufflé Fs selon l'envergure permet de souffler principalement de l'air du côté radialement externe du bord de fuite 15b, là où l'écoulement est le plus rapide.

La modulation de débit d'air soufflé Fs dans le temps permet de s'adapter aux conditions de vol et, si besoin, de minimiser les pertes moteurs en réduisant le débit d'air soufflé Fs.

### COUPLAGE SOUFFLAGE/REDRESSEUR

De manière avantageuse, les moyens de soufflage précédemment décrits peuvent être installés en combinaison avec les volets mobiles 16 sur les bras de maintien 15.

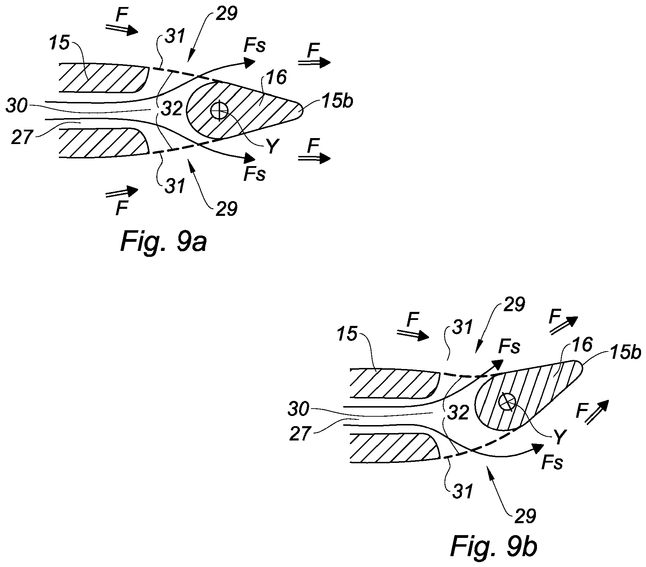

En référence aux figures 9a, 9b, les ouvertures d'éjection 29 sont placées devant le volet mobile 16. Ici, le volet mobile 16 ferme par l'aval la cavité 30 alimentant les orifices d'éjection 29, qui ont la forme de fentes. Le bord de fuite du volet mobile 16 est également le bord de fuite 15b du bras de maintien 15.

Sur l'exemple présenté, les systèmes de fentes 31, 32 qui se décalent pour moduler le débit d'air soufflé Fs par la fente 29 sont installés conformément à la description faite en liaison avec les figures 8a, 8b.

En référence à la figure 9a, lorsque le volet mobile 16 est aligné dans l'axe général du profil du bras de maintien 15, le dispositif de soufflage d'air additionnel Fs fonctionne de manière similaire à ce qui est décrit à propos des figures 8b ou 8a, pour limiter le sillage du bras de maintien 15 dans son prolongement.

En référence à la figure 9b, lorsque le volet mobile16 est tourné suivant un angle de calage donné, il dévie l'écoulement général F et donc son sillage d'un angle sensiblement égal à son angle de calage. L'air soufflé Fs par les fentes 29 de part et d'autre du bras de maintien 15, en amont du volet mobile 16, sort toujours avec la même incidence de ces fentes 29. Cependant, les effets de pression sur l'intrados du volet mobile 16 et de succion sur l'extrados entraînent le débit d'air soufflé Fs dans l'écoulement principal F, suivant l'orientation du calage du volet mobile 16. Le soufflage effectué par les fentes 29 assure donc toujours sa fonction de limiter le déficit de vitesse dans le sillage du bras de maintien 15.

Par ailleurs, lorsque des aubes radiales 17 à calage variable sont disposées circonférentiellement entre les bras de maintien 15, comme indiqué à propos de la figure 4, elles peuvent également être équipées de moyens de soufflage. Dans ce cas, il peut être avantageux d'y installer des dispositifs tels que ceux décrits pour les bras de maintien 15 sans volet mobile 16, relation avec les configurations des figures 7b ou 8a et 8b. Des conduits 27 d'alimentation en air soufflé peuvent passer au niveau de l'axe Y' de calage. Il est à noter dans ce cas, que la faible corde des aubes radiale 17 à calage variable diminue leur effet de sillage par rapport aux bras de maintien 15 et rend ainsi le dimensionnement des dispositifs de soufflage moins contraignant.

## Revendications

1. Aéronef comprenant un fuselage (1) et un ensemble propulseur, ledit ensemble propulseur comprenant au moins un rotor de soufflante (7, 8) placé à l'arrière du fuselage (1), dans le prolongement de celui-ci suivant un axe (XX) longitudinal, et une nacelle (14) formant un carénage dudit au moins un rotor de soufflante (7,8) dans lequel passe un flux d'air (F), l'aéronef comportant une pluralité de bras radiaux (15, 17) de stators montés en amont dudit au moins un rotor de soufflante (7, 8) et s'étendant entre le fuselage (1) et la nacelle (14), l'aéronef étant **caractérisé en ce que** lesdits bras radiaux (15, 17) comportent au moins une partie mobile (16, 17) à calage variable configurée pour dévier axialement ledit flux d'air (F), les parties mobiles à calage variable pivotant autour d'axes (Y, Y') qui s'étendent radialement du fuselage (1) sensiblement à partir d'un même plan transversal à l'axe (XX) longitudinal et étant disposées à l'entrée de la nacelle (14) et **en ce que** la nacelle (14) comprend un bord amont et chaque bras radial comprend un bord d'attaque (15a) qui est relié au bord amont de la nacelle (14) et au fuselage (1).

2. Aéronef selon la revendication 1, comprenant en outre des moyens de réglage individuels du calage de la partie mobile (16, 17) des bras radiaux, de manière à permettre un calage adaptatif en fonction d'une inhomogénéité dudit flux d'air (F) en amont de l'ensemble propulseur.

3. Aéronef selon la revendication 1 ou 2, comprenant au moins un anneau de commande (19), de préférence situé à l'intérieur du fuselage (1), et un ensemble d'au moins deux bielles (20, 23) de liaison dudit au moins un anneau de commande (19) à chacune desdites parties mobiles (16, 17).

4. Aéronef selon l'une des revendications précédentes, dans lequel la pluralité de bras radiaux comporte au moins plusieurs bras de maintien (15), configurés pour maintenir la nacelle (14).

5. Aéronef selon la revendication précédente, dans lequel chaque bras de maintien (15) prolonge la nacelle (14) de soufflante jusqu'au fuselage (1).

6. Aéronef selon l'une des revendications 4 et 5, dans lequel chaque bras de maintien (15) comprend en amont, un bord d'attaque (15a) reliant le fuselage à la nacelle suivant une direction sensiblement parallèle à l'axe (XX) et en aval un bord de fuite (15b) sensiblement transverse à l'écoulement entrant dans la nacelle (14), la partie mobile (16) étant située sur le bord de fuite de chaque bras de maintien (15).

7. Aéronef selon l'une des revendications précédentes, dans lequel la pluralité de bras radiaux comporte au moins plusieurs aubes radiales (17) formant d'un bloc ladite partie mobile.

8. Aéronef selon l'une des revendications précédentes, dans lequel la pluralité de bras radiaux comporte au moins plusieurs bras radiaux (15) comprenant des moyens de soufflage configurés pour souffler, dans l'environnement d'un bord de fuite (15b) desdits bras radiaux, un flux d'air additionnel (Fs) s'additionnant audit flux d'air (F) dans le prolongement du bord de fuite (15b).

9. Aéronef selon la revendication précédente, dans lequel lesdits moyens de soufflage sont agencés pour souffler ledit flux d'air additionnel (Fs) hors desdits bras radiaux (15), en amont d'une partie mobile (16) à calage variable.

10. Aéronef selon l'une des revendications précédentes, dans lequel ledit rotor de soufflante (7, 8) a un diamètre extérieur sensiblement égal à un diamètre maximal du fuselage (1).

11. Aéronef selon l'une des revendications précédentes, comprenant une turbomachine comportant au moins un générateur de gaz (2a, 2b) configuré pour générer un flux primaire qui est délivré par une veine centrale (4) à au moins une turbine de puissance (3), ladite turbine de puissance (3) étant placée à l'arrière du fuselage (1) en prolongement de celui-ci et entraînant à sa périphérie ledit au moins un rotor de soufflante (7, 8).

12. Aéronef selon l'une des revendications précédentes, **caractérisé en ce que** les bras radiaux (15) sont répartis circonférentiellement autour de l'axe longitudinal et relient la nacelle (14), en amont du premier rotor de soufflante à une structure fixe de l'aéronef.

13. Aéronef selon l'une des revendications précédentes, **caractérisé en ce que** les bras radiaux (15) présentent une forme sensiblement trapézoïdale entre une base inférieure allongée, à son intersection avec le fuselage et une base extérieure courte, à son intersection avec la nacelle (14).

14. Aéronef selon l'une des revendications 8 à 13, **caractérisé en ce qu'**il comprend des moyens permettant de faire varier un débit du flux d'air additionnel (Fs) selon la position en envergure de chaque bras radial (15) et/ou de la réguler dans le temps.

## Patentansprüche

1. Luftfahrzeug, umfassend einen Flugzeugrumpf (1) und eine Triebwerksanordnung, wobei die Triebwerksanordnung mindestens einen Gebläserotor (7, 8), der an der Hinterseite des Flugzeugrumpfs (1) in der Verlängerung desselben entlang einer Längsachse (XX) platziert ist, und eine Gondel (14) umfasst, die eine Verkleidung des mindestens einen Gebläserotors (7, 8) bildet, durch den ein Luftstrom (F) strömt, und umfassend eine Vielzahl von radialen Statorarmen (15, 17), die stromaufwärts des mindestens einen Gebläserotors (7, 8) montiert ist und sich zwischen dem Flugzeugrumpf (1) und der Gondel (14) erstreckt, wobei das Luftfahrzeug **dadurch gekennzeichnet ist, dass** die radialen Arme (15, 17) mindestens einen beweglichen Teil (16, 17) mit variabler Feststellposition umfassen, der dazu ausgelegt ist, den Luftstrom (F) axial umzulenken, wobei die beweglichen Teile mit variabler Feststellposition um Achsen (Y, Y') schwenken, die sich radial vom Flugzeugrumpf (1) im Wesentlichen ausgehend von einer selben Ebene quer zur Längsachse (XX) erstrecken und am Eingang der Gondel (14) angeordnet sind, und dadurch, dass die Gondel (14) eine stromaufwärtige Kante umfasst und jeder radiale Arm eine Angriffskante (15a) umfasst, die mit der stromaufwärtigen Kante der Gondel (14) und mit dem Flugzeugrumpf (1) verbunden ist.

2. Luftfahrzeug nach Anspruch 1, weiter individuelle Mittel zum Regeln der Feststellposition des beweglichen Teils (16, 17) der radialen Arme umfassend, sodass eine adaptive Feststellposition in Abhängigkeit von einer Inhomogenität des Luftstroms (F) stromaufwärts der Triebwerksanordnung ermöglicht wird.

3. Luftfahrzeug nach Anspruch 1 oder 2, umfassend mindestens einen Steuerring (19), vorzugsweise im Inneren des Flugzeugrumpfs (1) gelegen, und eine Anordnung von mindestens zwei Pleueln (20, 23) zur Verbindung des mindestens einen Steuerrings (19) mit jedem der beweglichen Teile (16, 17).

4. Luftfahrzeug nach einem der vorstehenden Ansprüche, wobei die Vielzahl von radialen Armen mindestens mehrere Haltearme (15) umfasst, die dazu ausgelegt sind, die Gondel (14) zu halten.

5. Luftfahrzeug nach dem vorstehenden Anspruch, wobei jeder Haltearm (15) die Gebläsegondel (14) bis zum Flugzeugrumpf (1) verlängert.

6. Luftfahrzeug nach einem der Ansprüche 4 und 5, wobei jeder Haltearm (15) stromaufwärts eine Angriffskante (15a) umfasst, die den Flugzeugrumpf mit der Gondel entlang einer Richtung im Wesentlichen parallel zur Achse (XX) verbindet, und stromabwärts eine Abströmkante (15b) im Wesentlichen quer zur Strömung, die in die Gondel (14) eintritt, wobei der bewegliche Teil (16) auf der Abströmkante jedes Haltearms (15) gelegen ist.

7. Luftfahrzeug nach einem der vorstehenden Ansprüche, wobei die Vielzahl von radialen Armen mindestens mehrere radiale Schaufeln (17) umfasst, die den beweglichen Teil aus einem Block bilden.

8. Luftfahrzeug nach einem der vorstehenden Ansprüche, wobei die Vielzahl von radialen Armen mindestens mehrere radiale Arme (15) umfasst, die Gebläsemittel umfassen, die dazu ausgelegt sind, in die Umgebung einer Abströmkante (15b) der radialen Arme einen zusätzlichen Luftstrom (Fs) zu blasen, der sich zum Luftstrom (F) in der Verlängerung der Abströmkante (15b) hinzufügt.

9. Luftfahrzeug nach dem vorstehenden Anspruch, wobei die Gebläsemittel eingerichtet sind, um den zusätzlichen Luftstrom (Fs) außerhalb der radialen Arme (15) stromaufwärts eines beweglichen Teils (16) mit variabler Feststellposition zu blasen.

10. Luftfahrzeug nach einem der vorstehenden Ansprüche, wobei der Gebläserotor (7, 8) einen Außendurchmesser im Wesentlichen gleich einem maximalen Außendurchmesser des Flugzeugrumpfs (1) aufweist.

11. Luftfahrzeug nach einem der vorstehenden Ansprüche, umfassend eine Turbomaschine, die mindestens einen Gasgenerator (2a, 2b) umfasst, der dazu ausgelegt ist, einen primären Strom zu erzeugen, der über eine mittlere Ader (4) an mindestens eine Leistungsturbine (3) geliefert wird, wobei die Leistungsturbine (3) an der Hinterseite des Flugzeugrumpfs (1) in der Verlängerung desselben platziert ist und an ihrem Umfang den mindestens einen Gebläserotor (7, 8) antreibt.

12. Luftfahrzeug nach einem der vorstehenden Ansprüche, **dadurch gekennzeichnet, dass** die radialen Arme (15) umfänglich um die Längsachse verteilt sind und die Gondel (14) stromaufwärts des ersten Gebläserotors mit einer festen Struktur des Luftfahrzeugs verbinden.

13. Luftfahrzeug nach einem der vorstehenden Ansprüche, **dadurch gekennzeichnet, dass** die radialen Arme (15) eine im Wesentlichen trapezähnliche Form zwischen einer länglichen unteren Basis, an ihrer Schnittstelle mit dem Flugzeugrumpf, und einer kurzen äußeren Basis, an ihrer Schnittstelle mit der Gondel (14), aufweisen.

14. Luftfahrzeug nach einem der Ansprüche 8 bis 13, **dadurch gekennzeichnet, dass** es Mittel umfasst, die ermöglichen, einen Durchsatz des zusätzlichen Luftstroms (Fs) gemäß der Spannweitenposition jedes radialen Arms (15) zu variieren und/oder diese im Zeitverlauf zu regulieren.

## Claims

1. Aircraft comprising a fuselage (1) and a propulsion assembly, said propulsion assembly comprising at least one fan rotor (7, 8) placed at the rear of the fuselage (1), in the continuation thereof along a longitudinal axis (XX), and a nacelle (14) forming a fairing of said at least one fan rotor (7, 8), through which an airflow (F) passes, the aircraft comprising a plurality of radial stator arms (15, 17) mounted upstream of said at least one fan rotor (7, 8) and extending between the fuselage (1) and the nacelle (14), said aircraft being **characterised in that** said radial arms (15, 17) comprising at least one variable-pitch movable portion (16, 17) designed to axially deflect said airflow (F), the variable-pitch movable portions pivoting about axes (Y, Y') which extend radially from the fuselage (1) substantially from the same plane transverse to the longitudinal axis (XX) and being positioned at the intake of the nacelle (14) and **in that** the nacelle (14) comprises an upstream edge and each radial arm comprises a leading edge (15a) which is linked to the upstream edge of the nacelle (14) and to the fuselage (1).

2. Aircraft according to claim 1, further comprising individual means for adjusting the pitch of the movable portion (16, 17) of the radial arms, so as to enable a pitch that can be adapted according to a non-homogeneity of said airflow (F) upstream of the propulsion assembly.

3. Aircraft according to claim 1 or 2, comprising at least one control ring (19), preferably located inside the fuselage (1), and one assembly of at least two connecting rods (20, 23) connecting said at least one control ring (19) to each of said movable portions (16, 17).

4. Aircraft according to any of the preceding claims, wherein the plurality of radial arms comprises at least a plurality of supporting arms (15), designed to support the nacelle (14).

5. Aircraft according to the preceding claim, wherein each supporting arms (15) extends the nacelle (14) from the fans to the fuselage (1).

6. Aircraft according to claims 4 and 5, wherein each supporting arms (15) comprising upstream, a leading edge (15a) connecting the fuselage (1) to the nacelle along a direction substantially parallel to the longitudinal axis (XX) and downstream, a trailing edge (15b) substantially transverse to the flow entering the nacelle (14), the movable portion being situated on the leading edge of each supporting arms 15).

7. Aircraft according to any of the preceding claims, wherein the plurality of radial arms comprises at least a plurality of radial vanes (17) forming said movable portion as a whole.

8. Aircraft according to any of the preceding claims, wherein the plurality of radial arms comprises at least a plurality of radial arms (15) comprising blowing means designed to blow, into the environment around a trailing edge (15b) of said radial arms, an additional airflow (Fs) supplementing said airflow (F) in the continuation of the trailing edge (15b).

9. Aircraft according to the preceding claim, wherein said blowing means are arranged so as to blow said additional airflow (Fs) outside said radial arms (15), upstream of a variable-pitch movable portion (16).

10. Aircraft according to any of the preceding claims, wherein said fan rotor (7, 8) has an outer diameter that is substantially equal to a maximum diameter of the fuselage (1).

11. Aircraft according to any of the preceding claims, comprising a turbine engine having at least one gas generator (2a, 2b) designed to generate a primary flow, which is carried by a central flow path (4) to at least one power turbine (3), said power turbine (3) being positioned at the rear of the fuselage (1) in the continuation thereof and driving, at its periphery, said at least one fan rotor (7, 8).

12. Aircraft according to any of the preceding claims, **characterised in that** the radial arms (15) are distributed circumferentially around the longitudinal axis and link the nacelle (14), upstream the first fan rotor to a fixed structure of the aircraft.

13. Aircraft according to any of the preceding claims, **characterised in that** the radial arms (15) have a substantially trapezoidal shape between a lower elongate base, at its intersection with the fuselage and a short outer base, at its intersection with the nacelle (14).

14. Aircraft according to one of claims 8 to 13, **characterised in that** comprises means configured to vary a flow rate of the additional airflow (Fs) according to the position in the spanwise direction of each radial arm (15) and/or to regulate said flow rate in time.
